# EUROPEAN PATENT SPECIFICATION

(11) **EP 1 869 742 B1**
(45) Date of publication and mention of the grant of the patent: **07.09.2011**
(21) Application number: 06726679.1
(22) Date of filing: 07.04.2006
(51) Int. Cl.: H02G 3/08, H03G 3/06

(54) **MEANS FOR ATTACHING A CONDUIT AT AN OPENING AND A DISTRIBUTION BOX ASSEMBLY INCORPORATING SAME**
MITTEL ZUM ANBRINGEN EINES DURCHGANGS AN EINER ÖFFNUNG UND VERTEILERDOSENBAUGRUPPE DAMIT
MOYEN D'ATTACHE D'UN CONDUIT A UNE OUVERTURE ET ENSEMBLE BOITE DE DISTRIBUTION LE COMPRENANT

(30) Priority: 09.04.2005 GB 0507214
(43) Date of publication of application: 26.12.2007
(73) Proprietor: Poulton, Adrian Roger, West Midlands B94 5NU (GB)
(72) Inventor: McNEIL, Alexander, McKechran, Hardie, Gladesville, NSW 2000 (AU)
(74) Representative: Hackett, Sean James
(86) International application number: PCT/GB2006/001276
(87) International publication number: WO 2006/109023

(56) References cited:
- US-A- 4 959 506
- US-A- 5 413 386

## Description

This invention relates to means for attaching a conduit at an opening, and to a distribution box assembly incorporating same. The invention also relates to other independent features of a distribution box assembly.

US Patent Specification No. 4959506 discloses a distribution box comprising a body in which a plurality of ports are disposed, respective connectors being adapted to engage in any one of the ports. Each connector has a set of castellations at one of its ends sized to pass through cutouts at each port, the castellations being of tapered form to engage with an inner wall of the respective port when the connector is inserted into the port and rotated. The rotation causes the connector to be:urged forwardly into tight engagement with the body, in particular by means of an annular sealing face of the connector engaging an annular sealing face of the port. If required, a seal can be provided between said sealing faces.

One problem with such an arrangement is that it can be difficult sufficiently to compress the seal axially to allow the connector to be inserted into the port so that its tapered castellations pass through the cutouts and are located behind the inner wall of the port ready for the connector to be rotated.

One object of the invention is to overcome this problem.

Another object of the invention is to provide a box assembly in which a lid thereof is securable to the box so that it is vibration proof.

A further object of the invention is to provide a box assembly in which a lid thereof has a part locatable on the box against rotation and securable by a further lid part.

A final object is to provide a distribution box assembly incorporating convenient means of retaining a mounting plate therein.

According to a first aspect of the invention there is provided means for attaching a conduit at an opening, or for closing said opening, comprising a connector, to which said conduit is, or is adapted to be, engaged, or which is closed, and a body in which the opening is provided, the opening having an inwardly radially extending wall with cut-outs around the periphery thereof and a rear surface, the connector having at or adjacent one end thereof a plurality of castellations complementary to the cut-outs of the opening, the castellations being formed as tightening means such that if the castellations are aligned with and moved through said cut-outs respectively and the connector then rotated the castellations engage said rear surface with the tightening means causing the connector to be urged towards the opening, characterised by an inner annular surface of the opening forward of its inwardly radially extending wall being tapered so that as rotation occurs and the connector is urged towards the opening an annular seal carried by the connector is radially compressed so as tightly to seal between the connector and the body.

Preferably the tightening means of the castellations is formed by them being of wedge shape. Desirably the annular seal is carried in an annular groove of the connector rearwards of its castellations. Advantageously the seal is an O-ring. Conveniently the opening is a port formed in a side wall of an electrical distribution box, and more conveniently a plurality of said ports are provided in said side wall and/or a side wall of the box.

According to a second aspect of the invention, there is provided a box assembly comprising means according to the first aspect of the invention, wherein the body is constituted by a box having an open end with a screw thread on the exterior of said box at or adjacent said open end, and a lid assembly comprising an outer lid part and an inner lid part, the outer lid part being centrally open to receive the closed inner lid part and being provided with inner screw threads complementary to said threads on the exterior of the box, an outer peripheral surface of the inner lid part being formed with serrations and part of an inner peripheral surface of the outer lid part being formed with complementary serrations so that the serrations on the outer lid part pass over the serrations on the inner lid part as the outer lid part is screwed onto the box, in use, but prevent loosening/unscrewing of the outer lid part, loosening/unscrewing being provided by release means on the outer lid part.

Preferably the release means is in the form of a hinged part of the outer lid part on which said complementary serrations are provided. Desirably a portion of the outer lid part is recessed to allow for hinging movement of the release means. In one embodiment a self tapping or other screw or other locking means can be received in said recessed portion to prevent such hinging movement, the screw or other locking means being releasable by a special tool, or other implement, to allow such hinging movement. In this way unauthorised release of the outer lid part, and thus the lid itself, is prevented. Desirably the inner lid part and the box have complementary inter-engaging recesses and projections to prevent rotation of the inner lid part on the box when the outer lid part is being screw-threadingly engaged with the box. These recesses and projections are particularly desirable if the sealing means is of a material having a low coefficient of friction. Preferably the box assembly is an electrical distribution box.

Advantageously the inner lid part is sealed to said box by way of sealing means engaged between said inner lid part and an outer sealing surface of the box.

According to a third aspect of the invention there is provided a lidded container comprising means according to the first aspect of the invention, a two-part lid and wherein the body is constituted by a container body having an open end at which the lid of the container is fitted, said lid being formed by an outer lid part which is screw-threadedly engaged with the container body, in use, and an inner lid part which is directly or indirectly engaged, in use, with said container body at the open end thereof, the container body and the inner lid part having respective complementary inter-engaging location means, so that as said outer lid part is tightened on said container body, in use, the inner lid part fitted to the container body is prevented from rotating therewith.

Desirably during said tightening, the inner lid part is urged into said engagement with the container body.

Preferably the inner lid part is indirectly engaged with the container body via sealing means. More preferably the sealing means is carried by the inner lid part. Desirably the sealing means is an O-ring. In one embodiment the location means comprise respective recess and projection means and preferably there is a multiplicity of said recess and projection means spaced around the inner lid part and the container body, so that the inner lid part can be fitted to the container body at any selected one of a number of possible relative positions. The container is preferably an electrical distribution box.

According to a fourth aspect of the invention there is provided a distribution box assembly comprising means according to the first aspect of the invention, wherein the body is constituted by a box body having a base and a side wall upstanding from the base, with at least one port in said side wall for a connector to be fitted in said port, in use, for connecting a conduit to said box assembly, and for at least partly retaining a mounting plate within the box body.

According to a fifth aspect of the invention there is provided a box assembly comprising means according to the first aspect of the invention, wherein the body is constituted by a box having an open end with a screw thread on the exterior of said box at or adjacent said open end, and a lid assembly comprising an outer lid part and an inner lid part, the outer lid part being centrally open to receive the inner lid part and being provided with inner screw threads complementary to said threads on the exterior of the box, the inner lid part being formed of a cover component having its outer peripheral portion arranged to engage sealing means on an outer sealing surface of the box at the open end thereof, and an inner component held between the cover component and the box and preventing inward movement of the sealing means when the outer lid part is tightened into screw threaded engagement with the box, such tightening causing the cover component to compress said sealing means.

The invention will now be described, by way of example, with reference to the accompanying drawings, in which:
Figure 1 is a plan view of a distribution box of a distribution box assembly of the invention,
Figure 2 is a top perspective view of the box of Figure 1,
Figure 3 is a side view of the box of Figure 1,
Figure 4 is a cross-sectional view on the line 4-4 of Figure 1,
Figure 5 is a rear perspective view of one embodiment of a connector of a distribution box assembly of the invention,
Figures 6 to 10 are respectively a view of one side, a front perspective view, a rear view, a view of another side and a front view of the connector of Figure 5,
Figure 11 is a cross-sectional view on the line 11 of Figure 10,
Figures 12 and 13 are partly cut-away respective lower and right side perspective views of a distribution box assembly of the invention,
Figure 14 is a vertical central cross-sectional view of the assembly of Figure 13,
Figures 15 to 19 are respectively a view of one end, a view of one side, a perspective view of the other end, a view of another side, and a view of said other end of another embodiment of a connector of a distribution box assembly of the invention,
Figure 20 is a vertical central cross-sectional view of the connector of Figure 18,
Figures 21 and 22 are respectively a top view and a side view of a lid of a distribution box assembly of the invention,
Figure 23 is a cross-sectional view on line 23-23 of Figure 21,
Figures 24 to 26 are respectively a top view, a top perspective view and a side view of the distribution box of Figures 1 to 4 fitted with the lid of Figures 21 to 23,
Figure 27 is a view like Figure 25, but with part of the lid shown cut-away, and no lid seal,
Figure 28 is a vertical central cross-sectional view of the box and lid assembly of Figures 24 to 26, with a tamper resistant screw shown,
Figure 29 is a perspective view of the half of the assembly shown in Figure 28.
Figure 30 shows an embodiment of a mounting plate fitted in a distribution box assembly of the invention, with the box lid not shown,
Figure 31 shows, in plan view, a mounting rail fitted in a distribution box of the invention, at a first position,
Figures 32 and 32a show a perspective view and a sectional view respectively corresponding to Figure 31,
Figures 33 and 33a are views like Figures 32 and 32a showing the rail at a second position,
Figures 34 and 35 are respectively an exploded perspective view and a sectional side view of another embodiment of a box assembly of the invention,
Figure 36 is a top perspective view of another embodiment of the distribution box of Figure 2, with an associated connector of the distribution box shown in perspective, in position to engage with a port of the box,
Figure 37 is a view like Figure 14, but showing the connector and box of Figure 36 engaged together at a centre port of the box, and
Figure 38 is a view like Figure 37, but for a different form of box.

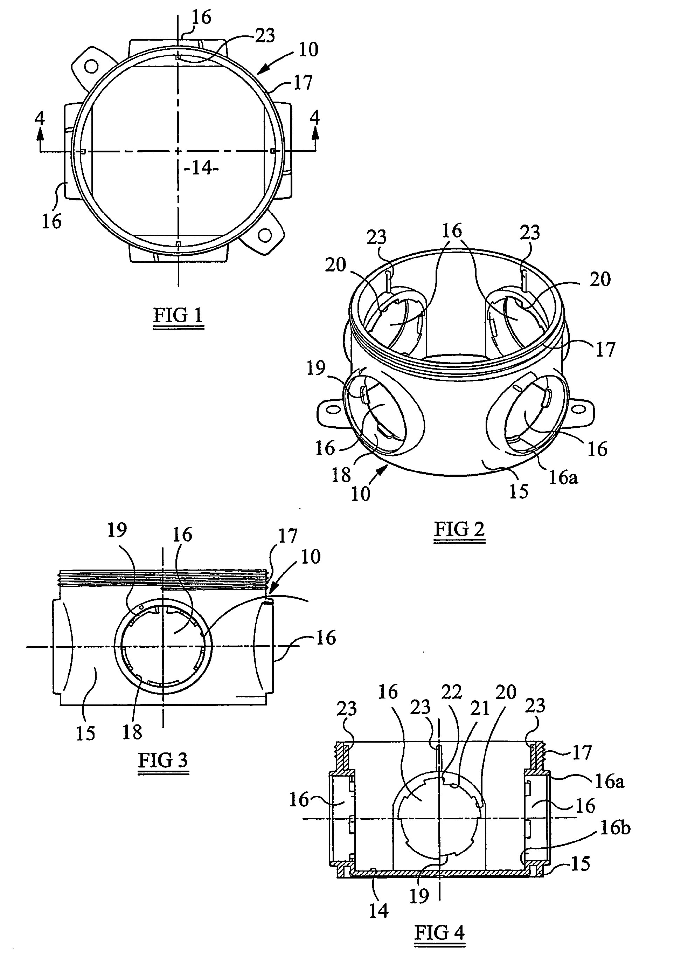

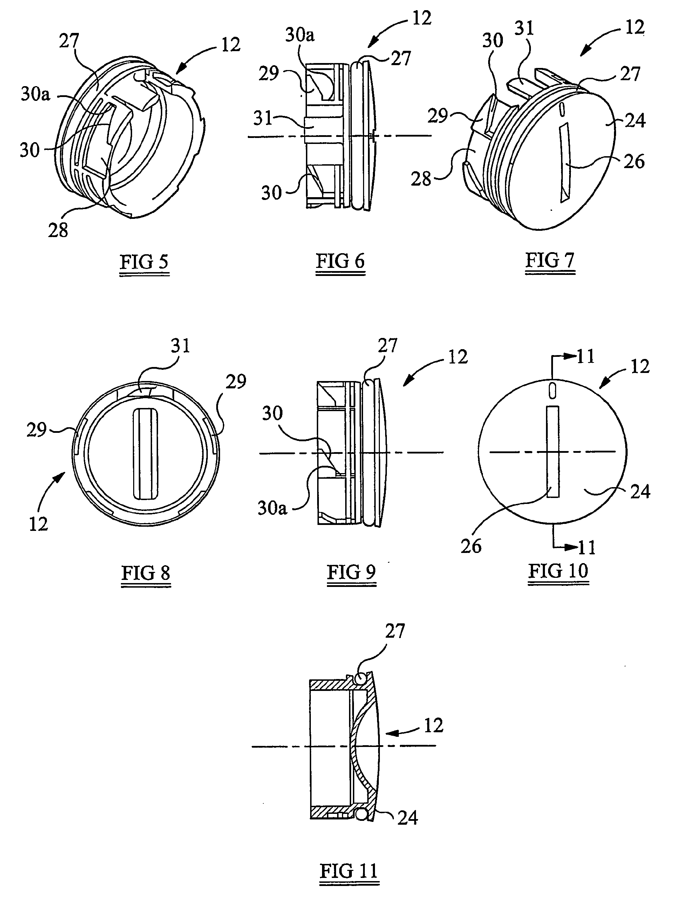

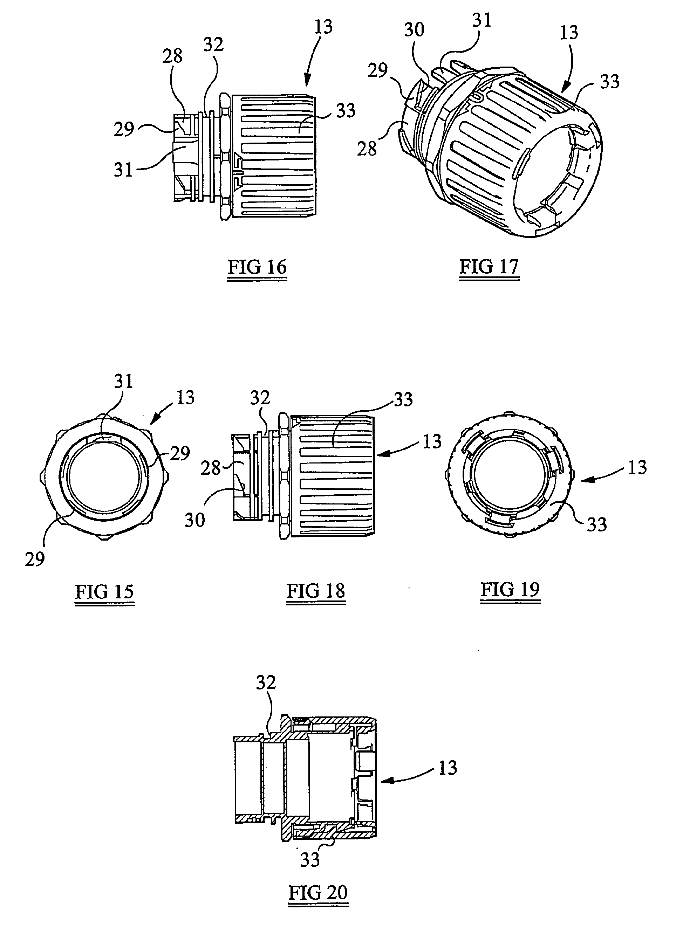

In Figures 1 to 31 of the accompanying drawings there is shown a distribution box assembly comprising a distribution box 10, a lid 11 and one or more connectors, which can be in the form of the connector 12 shown in Figures 5 to 11, or a connector 13 shown in Figures 15 to 20.

As shown best in Figures 1 to 4, the distribution box 10 comprises a cylindrical body formed by a flat circular base 14 with an integral cylindrical side wall 15 upstanding therefrom. Preferably the distribution box is made of rigid plastics material. Four circular ports 16 are arranged in the side wall 15, these ports all being at the same distance from the base 14 and arranged equi-angularly around the side wall, so that there is a 90° spacing between adjacent ports, as best shown in Figures 1 and 2. The box 10 is open-topped and at or adjacent this open end of the box the side wall 15 is externally screw-threaded as shown at 17.

Each port is formed by the material of the side wall being extended both inwardly and outwardly, so as to define an inner cylindrical surface 18 of the port. At the inner end of this surface, i.e. where it projects into the interior of the box 10, there is an inwardly radially extending wall 19 which is formed with cut-outs 20 around the periphery thereof. In the embodiments shown in the drawings, there are four ports, although the number can be varied as required. Moreover although the arrangement of cut-outs can be the same for each port, this is not essential and particular ports could be arranged to receive only a particular form of connector.

As shown in Figure 4, the inward radial extent of the wall 19 is generally constant between the cut-outs 20. However at the top of the port in the orientation of the box as shown in Figure 4, the wall is extended further inwardly to define a flat ramp surface 21 leading to a generally radial undercut shoulder surface 22 which forms one end of the uppermost cut-out 20. This is for a purpose to be described hereinafter. Also in relation to the box 10, it can be seen from Figures 3 and 4 that the surface 18 of the port is not in fact wholly cylindrical, but tapers from its outer end, at the outer edge 16a of the port 16, to its inner end, at the inner edge 16b of the port 16, so that the opening is reduced towards its inner end. Again this is for a purpose to be described hereinafter.

Finally in relation to the box 10, it will be noted from Figures 1, 2 and 4, that on the interior surface of the side wall 15, centrally above each port 16 there is provided a vertical projection in the form of a rib 23, which terminates just short of the open end of the box. As will be described hereinafter, this is for engagement with part of the lid 11 so as to fit it to the box 10 against the rotation relative thereto.

Turning now to Figures 5 to 11, it can be seen that shown therein is the connector 12 which, in the embodiment illustrated in the Figures is adapted to engage in any one of the ports 16. As can be seen from Figures 5 to 11, the connector 12 is in the form of a blanking plug to close off a port 16 when fitted thereto. The connector 12 is of generally cylindrical form having a closed end which has an outer surface 24. As shown best in Figures 7, 10 and 11, a central part of the outer surface 24 is formed with a rectangular slot 26 formed by a displacing material concavely inwards as shown in Figure 11. The slot 26 is for receiving the edge of a coin or the like, to rotate the connector in a locking or unlocking direction.

At the exterior of the connector 12, adjacent the closed end, there is defined an annular groove in which is fitted a radially compressible O-ring seal 27.

Extending forwardly of the closed end of the one-piece, preferably plastics material connector 12 is an annular wall 28 adjacent the free end of which is provided a set of castellations 29 which are arranged to be complementary to the cut-outs 20 at port 16. As can be seen from Figures 5 to 11, each castellation is tapered on its rear face, i.e. its face opposite the closed end of the connector, this tapered face being denoted by the numeral 30 in Figures 5 to 11. The castellations are arranged such that the connector 12 can be positioned at the entry to a port 16 with the castellations aligned with the cut-outs 20. The connector can then be pushed into the port so that the castellations pass through the cut-outs 20 to a position where the part of the tapered face 30 furthest from the closed end of the connector 12 is just clear of the interior surface of the wall 19. Accordingly if the connector 12 is now rotated in the an appropriate direction, the face 30 will act as a cam surface along which the rear surface of the wall 19 engages, thereby drawing the connector 12 tightly into engagement at the port 16, rotation being possible until the engaged wall 19 reaches the innermost end of the tapered face 30 at which there is an axially directed stop surface 30a.

As mentioned above, an 0-ring seal 27 is provided around the outside of the connector 12, and when the insertion and rotation of the connector occurs this seal engages the inner surface 18 of the port. However since, as mentioned above, this surface tapers inwardly, the pulling into port of the connector 12 as it is rotated causes radial compression of the O-ring seal 27 in order to form a tight seal between the connector and the distribution box. The construction and arrangement of the connector relative to the box is such that preferably no radial compression of the seal commences until the connector has been received sufficiently far into the port to allow for it to be rotated. Thus the seal preferably provides no resistance to the initial insertion of the connector 12 into the port to a position where rotation of the connector is possible. This is in contrast to known distribution box and connector arrangements where an O-ring seal is disposed between facing sealing surfaces of the port and the connector respectively, the arrangement being such that the seal is compressed axially as the connector is pushed into the port. This makes it difficult to insert the connector sufficiently far into the port to allow 'castellations' thereon to pass through the cut-outs to a position where the connector can be rotated, in that the O-ring seal provides a significant resistance to the inwards motion of the connector. The present invention overcomes this problem in an effective and convenient manner by providing radial compression of the seal as described above.

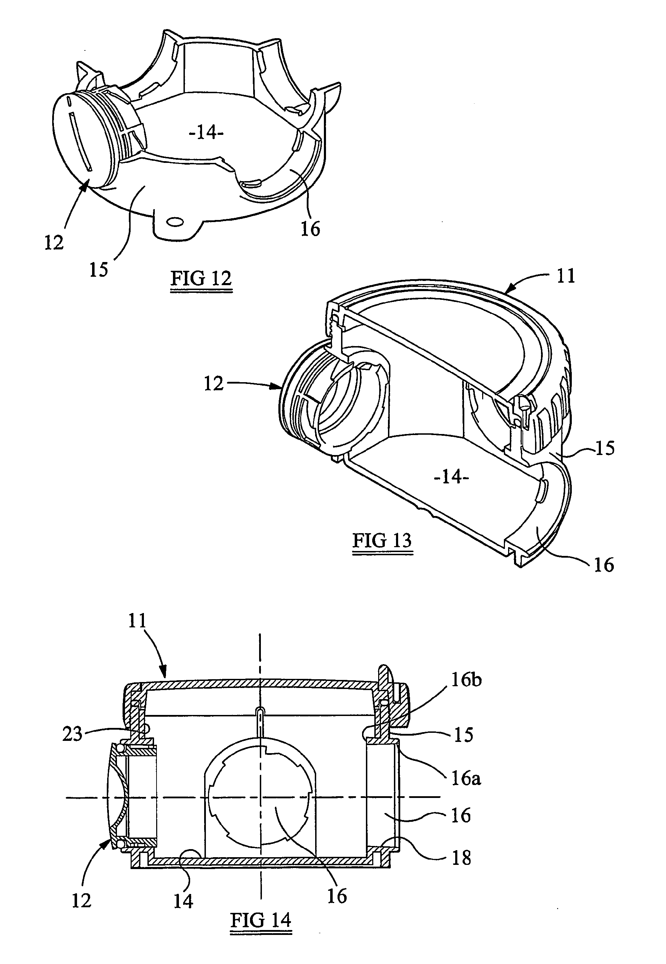

Lastly with regard to the connector 12, it will be noted that between one pair of castellations there is provided an interruption to the annular wall 28 in the form of an inwardly extending flexible projection, in the form of a finger or tooth 31, which, as shown best in Figure 8, is tapered along one of its longitudinal sides, the opposite longitudinal side being generally radial and of a height to match the surface 22 of a port. Accordingly when the connector 12 is inserted into a port and rotated as described above, the tapered side of the tooth 31 will engage with the ramp surface 21 of the wall 19 so as to flex the tooth generally inwardly. This inward force continues until the rear surface of the tooth, which as described above, is generally radial, moves out of engagement with the ramp surface 21. The tooth then snaps upwardly to fit in the cut-out which has the surface 22 at its one side, the snap-fitting of the tooth in this cut-out acting as a lock so as securely to hold the connector in its port (Figures 12 to 14). Any attempted rotational movement of the connector in its opposite direction will be resisted by way of the radial longitudinal side of the tooth engaging against the surface 22. The tooth can be released from engagement in its cut-out by flexing it inwards either manually or by means of an implement, rotation in the opposite direction for the connector then being possible to a position where the castellations are aligned with the cut-outs, thereby allowing withdrawal of the connector from the port.

Whilst the embodiment so far described shows the connector in the form of a blanking plug, it will be understood that the connector can be of any alternative suitable form and in particular would be in the form of a component which enables a rigid or flexible conduit to be connected by means of a connector to the distribution box. For example a thread could be formed in the blanking plug for engagement with a thread of a conduit, whilst the connector 13 shown in Figures 15 to 20 is for connection of a corrugated flexible conduit to the distribution box.

The connector 13 has its one end substantially of the same form as the end of the blanking plug forming connector 12, namely it is formed with the annular wall 28, the castellation 29, the tapered face 30, and the flexible tooth 31. Additionally it is provided with an exterior annular groove 32 which receives an O-ring seal equivalent to the seal 27 of the connector 12. For convenience parts of the connector 13 which are identical with the equivalent parts of the connector 12 have been given the same numerals.

Accordingly in use, the connector 13 is inserted into the port 16 with castellations of the connector 13 aligned with the cut-outs 20 of the port. The connector 13 is pushed into the port sufficiently to allow the start of the tapered faces 30 of the castellations 29 to be behind the interior surface of the wall 19, thereby then to allow rotation of the connector 13 to commence. As described in relation to the connector 12, up until this point there has preferably been no radial compression of the O-ring seal of the connector. The connector 13 is then rotated in an appropriate direction so as to move the tapered face 30 along the engaging inner surface of the wall 19 so as tightly to draw the connector 13 into the port 16, and at the same time radially compress the O-ring seal in the groove 32. Additionally, as with the connector 12, the tooth 31 of the connector 13 will initially be inwardly flexed, this tooth however snapping back into its associated cut-out 20 when it leaves the ramp surface 21, thereby locking the connector 13 in place at the port.

The connector 13 differs from the connector 12 in that it is open at both ends, the end remote from that which is received in the port being generally in the form of a pipe fitting as disclosed in British Patent Specification No. 2382633B, it being intended that this end, which is equivalent to a body of a connection device of the British patent, is engaged with a cap nut 33, the body and the cap nut together forming a connection device for the connection of a corrugated flexible conduit as described in that patent specification. However the precise form of the connection of a conduit forms no part of the present invention and will thus not be referred to further. However it will be understood that a connector 13 would, in use, be connected to the distribution box in the same manner as shown in Figures 12 to 14 for the connector 12, with the conduit extending out of the end.

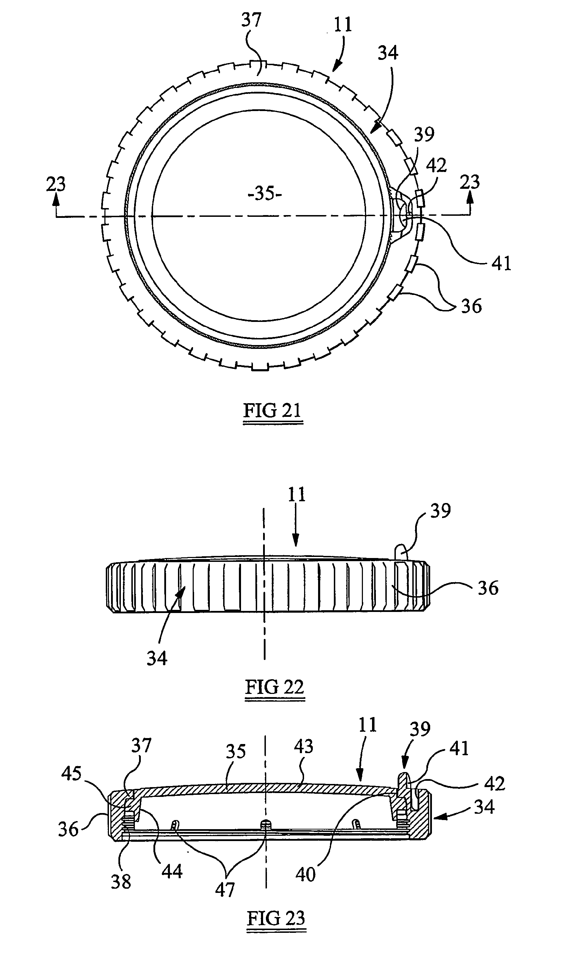

The lid 11 shown in detail in Figures 21 to 23 is in two parts, these being an outer lid part 34 and an inner lid part 35. The outer lid part 34 is in the form of an axially short ring which is formed with exterior knurling 36 to enable the lid part 34 to be manually grasped and turned. At one of its open ends the ring is formed with a short radially inwardly directed annular lip 37, whilst at its opposite end the lid part 34 is formed internally with a screw thread 38 which matches the exterior screw thread on the box 10 so that this lid part can be screwed onto the open end of the distribution box 10. Around a relatively small part of its periphery, the outer lid part 34 is enlarged outwardly to provide a releasable lock in the form of an upstanding flexible finger 39. A lower part of this finger continues the lip 37 and on the inside surface of this continuation of the lip there is provided a series of vertical serrations 40. The outer side of the finger, at a level above the serrations 40 is formed with a concave recess 41, and outwardly of this recess there is formed in the enlarged part of the ring a bore 42. As will be described hereinafter, this finger 39 acts as a lock for the lid and in one embodiment a self-tapping screw (not shown) is inserted into the bore 42, with its head being received in the recess 41 so as to prevent release of the lock without the use of a screwdriver to undo the self-tapping screw. In an alternative embodiment some other form of component can replace the self-tapping screw, this component requiring a particular implement to release it, thereby preventing unauthorised release of the finger and thus of the lid. However in another embodiment, the ring would not be provided with the recess 41 and bore 42.

The inner lid part 35 is in the form of a slightly domed ring 43 from which depends an annular rim 44 at the outer periphery thereof, the ring 43 and rim 44 being integral. Moreover an annular flange 45 extends radially outwardly from the exterior surface of the rim 44 just below the level of the ring 43. The outer annular peripheral surface of the ring 43 above the flange 45 is provided with vertical serrations around the whole thereof, these serrations being arranged to match the serrations 40 on the finger 39 and form a ratchet-like mechanism so that the serrations 40 can pass in only one direction around the serrations, movement in the opposite direction being resisted. Finally in relation to the inner lid part 35, it will be noted that at the free end of the rim 44 there are provided eight equi-spaced recesses 47 of a shape to match the top of the ribs 23 so that when the lid 11 is placed on the distribution box 10, the four ribs 23 are engaged with an associated aligned four recesses 47 respectively so as to lock the inner lid part 35 against rotation relative to the distribution box 10. In certain instances it can be important that the inner lid part 35, or equivalent, is in a specific orientation relative to the box 10, and this can be accomplished by providing a larger number of recesses 47 than ribs 23.

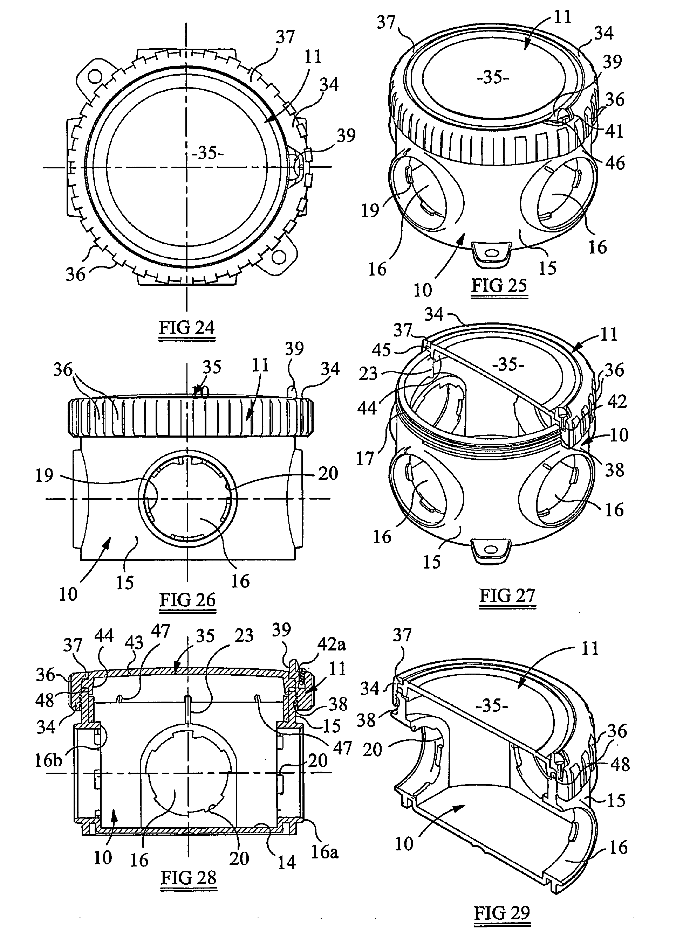

As shown in Figures 21 to 23, the two parts of the lid 11 are assembled together so that the undersurface of the lip 37 engages on the upper annular surface of the annular flange 45. In this position the serrations 40 on the flexible finger 39 are in engagement with the serrations around the periphery of the domed ring 43. These serrations are arranged, as mentioned above, so that the outer lid part 34 is intended to be rotated relative to the inner lid part 35 in one direction only, e.g. in the manner of a ratchet. Figures 24 to 29 show the lid fitted to the top of the distribution box 10, and it can be seen that whilst the outer lid part 34 is screw-threaded engaged with the distribution box 10 by way of the screw threads 17 and 38, the inner lid part 35 does not, in this embodiment, directly engage with the upwardly facing annular top surface of the box 10, but indirectly engages through the intermediary of an O-ring seal 48, this seal being fitted in the junction between the lower surface of the flange 45 and the outside surface of the rim 44 as shown best in Figures 28 and 29. In fact Figure 27 shows an alternative arrangement where this seal is omitted and the inner lid part 35 engages directly onto the top annular surface of the open end of the distribution box 10 by way of the undersurface of the annular flange 45. However a seal would generally be provided. From the description above, it will be understood that the lid is fitted onto the distribution box either together in the form of the two parts 34 and 35 or separately by way firstly of the inner part 35 and then secondly by engaging the outer lid part 34 onto the inner lid part 35 which has already been engaged on the top of the box. As described above, the inner lid part 35 would be fitted non-rotatably to the distribution box 10 by way of the engagement of the ribs 23 and recesses 47 as shown, for example, in Figure 28. In either event, the lid is tightened onto the distribution box by rotating the outer lid part 34, the serrations 40 and being as described above, to allow relative rotation of the outer lid part 34 around the inner lid part 35 in one direction to tighten the lid. Also as described above, rotation in the opposite direction to release the lid is preferably not possible unless the flexible finger 39 is moved rearwardly away from the inner lid part 34 so as to release the engagement between the serrations 40 and the serrations. Once this has occurred, the outer lid part 34 can be unscrewed from the distribution box 10 and the complete lid then removed. Also as described above, it is possible to insert a self-tapping screw 42a (Figure 28) or other locking element in the bore 42 so that unauthorised release of the lid is prevented, and in particular a specific authorised implement may be necessary to release the locking element in the bore 42.

In an alternative arrangement, not illustrated, the serrations may or not still be provided on the inner lid part 35, but no serrations may be provided on the outer lid part 34, so that no flexible finger 39 or enlarged part of the outer lid part ring would be provided. In this arrangement it would be possible freely to tighten or release the outer lid part 34 relative to the distribution box 10. Moreover with both the arrangement shown in Figure 28 where the serrations 40 are provided, and also in this alternative arrangement where the serrations 40 are omitted, it would also be possible to omit the arrangement of ribs 23 and associated recesses 47. However where the O-ring seal 48 is of a material having a low co-efficient of friction, it is desirable to provide the ribs 23 and recesses 47 in order to prevent the inner lid part 35 rotating with the outer lid part 34 when this is screwed up onto the box 10 or released therefrom. In certain instances it can be important for the inner lid part 35 to remain fixed relative to the distribution box 10, for example to prevent wires passing through the inner lid part from being rotated and tangled due to the rotation of part 35. This would also be the case if the inner lid part 35 were, for example, to be provided with an electrical socket. Moreover the provision of the ribs 23 and recesses 47 are important if the flexible finger 39 and serrations 40 are omitted, in order to prevent relative movement of the inner lid part 35 relative to the box 10. With the arrangement shown in Figure 28, it will be appreciated that the fixing of the lid to the box is not only vibration resistant but is also tamper resistant by means of the self-tapping screw 42a or other locking means in the bore 42. The inner lid part 35 could be domed to a greater extent than that shown, for example to accommodate a camera therewithin and the part 35 could also be of clear material, for example if the distribution box is used with signal lights.

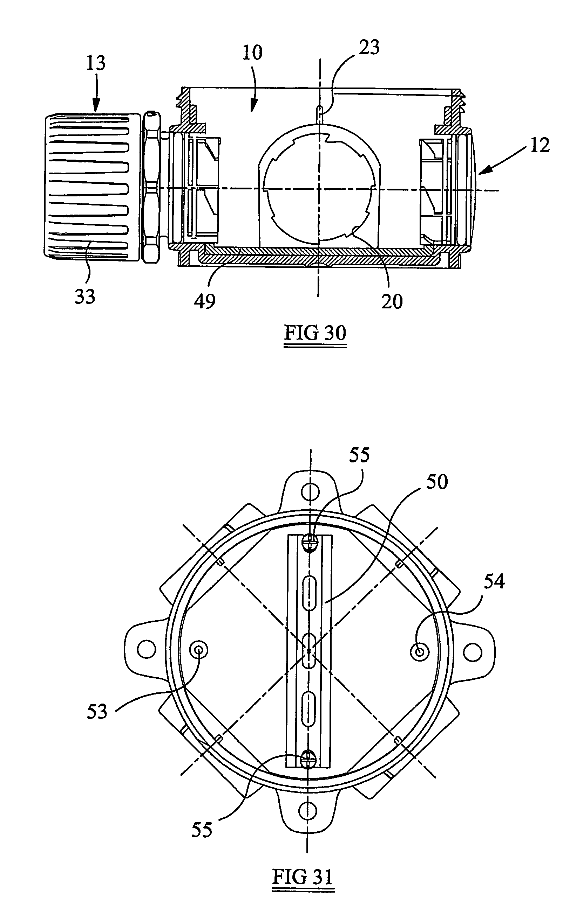

Another aspect of the present invention is the retention in the distribution box of a mounting plate. With all the embodiments described and illustrated, it would be possible to replace the circular box with one which is rectangular or square, or indeed of any other suitable geometric shape. However whatever the shape of the box, it would be possible to retain therewithin a correspondingly shaped mounting plate at a level between the base of the distribution box and a port 16, the retention against removal being at least partly by virtue of a connector extending through a port 16 and partly into the interior of the distribution box, for example as shown in Figures 12 to 14. For example with regard to Figure 14, it would be possible to insert a mounting plate into the distribution box through the open end thereof, with the plate being sized to pass down into the box avoiding the projecting inner parts of the four ports. However thereafter when the connectors are received at the respective ports the mounting plate would be 'trapped' below the connectors given that, as shown in Figure 14, the inner end of each connector projects beyond the interior end of this associated port. The mounting plate could be of metallic material, for example of aluminium, or it could be of plastics material. It could be arranged to lie on or off the base of the distribution box and it could be arranged that part of the mounting plate engages in one or more fittings at the interior of the side wall 15, whilst being retained by at least one connector, released from the fittings being possible when said connector is removed. Figure 30 shows such a mounting plate 49 fitted in position, the plate being on the base. It is shown held in position by oppositely disposed connectors 12 and 13.

Instead of the mounting plate 49, there may be received in the distribution box a DIN rail 50 for mounting electrical connectors. As shown in Figure 31, the box has two pairs of spaced, linearly aligned, internally threaded cylindrical pegs upstanding integrally from the inner base surface of the box. One pair of pegs 51, 52 has the pegs at the same, first height, whilst the other pair of pegs 53, 54, which are aligned at 90° to the aligned pegs 51, 52, has the pegs at the same, second height which is lower than said first height.

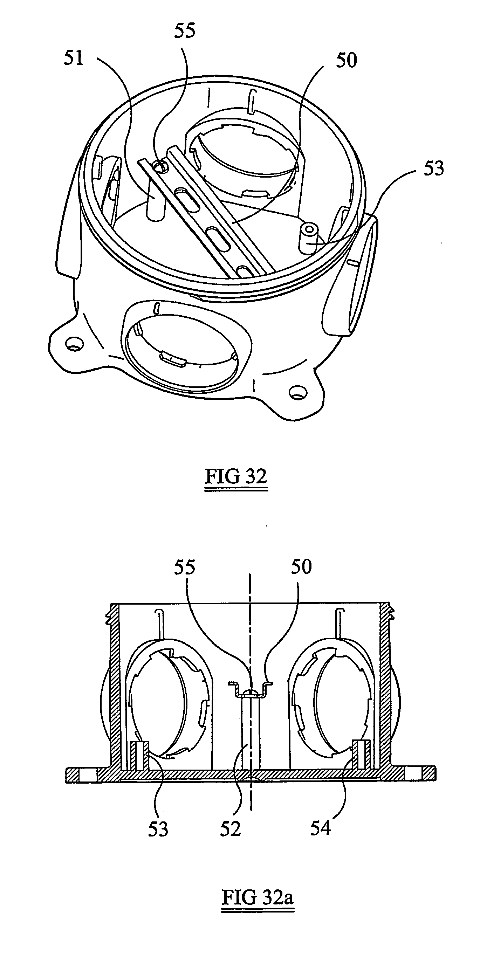

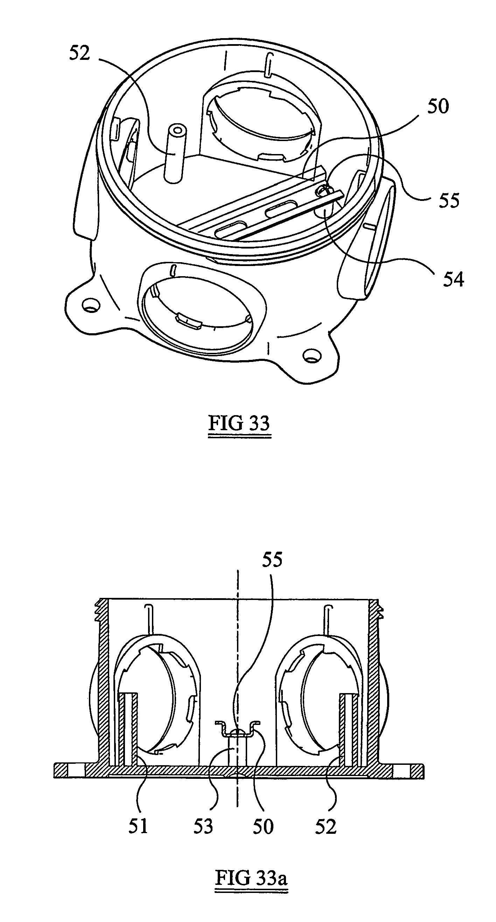

This arrangement of angularly displaced different peg heights enables the mounting of the DIN rail easily to be changed between an upper position, shown in Figures 31, 32 and 32a, where it is secured by screws 55 into the pegs 51, 52, and a lower position, shown in Figures 33 and 33a, where it is secured by the screws 55 into the pegs 53, 54. This allows for different heights of electrical connectors or the like to be received in the box, as required.

In a further embodiment, not illustrated, the box lid can have pegs, resilient tags or similar fixing means on its inner surface to retain a DIN rail in place (automatically by snap-fixing or by means of screws).

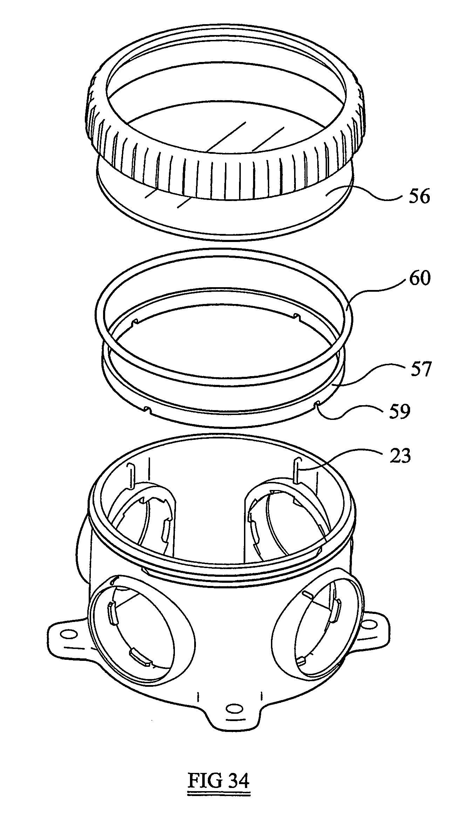

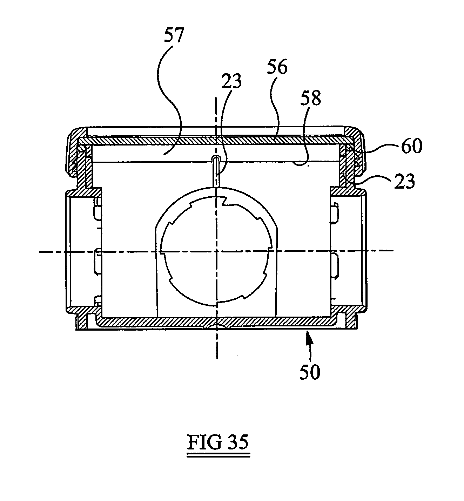

Figures 34 and 35 show a variation in respect of the lid described and shown hereinbefore. With the inner lid part 35 shown in Figure 23, the ring 43 is solid (i.e. closed). However it is sometimes required that one or more openings be provided through this ring, and it is a relatively expensive process to produce (by moulding) a number of special inner lid parts with the desired openings formed therein.

The arrangement shown in Figures 34 and 35 overcomes this difficulty by forming the inner lid part as two separate components, namely a flat plate 56 and an inner, open ring 57 which in its lower annular surface 58 is formed with recesses 59 equivalent to the recesses 47 of inner lid part 35.

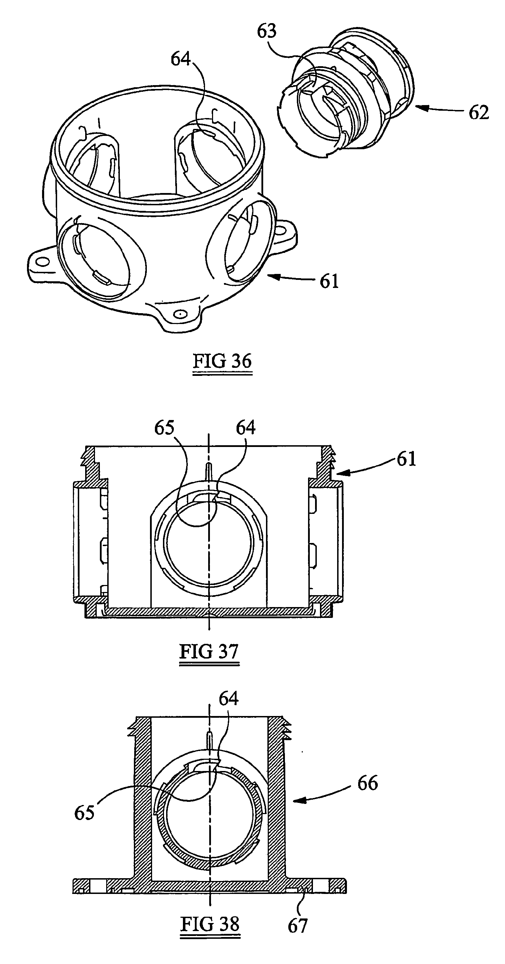

As shown in the assembled view of Figure 35, the ring is fitted onto a box 61, to be described in Figures 36 and 37, although it can equally well fit the box 10. The recesses 59 engage down on the ribs 23 to seat the ring 57, whilst the flat plate 56 is received centrally down onto the upper annular surface of the open ring. The plate is of a larger diameter than the ring so that it provides an annular projection beyond the ring circumference. Trapped between this annular projection and the upper annular surface of the box is an O-ring seal 60. Thus when the outer lid part is screwed onto the box as shown in Figure 35, the seal is held compressed. The presence of the ring 57 prevents the seal dislodging into the box.

If openings are required in the lid, it is more convenient and less costly to form these solely in the simple plate 56, rather than in the more complex (moulded) component 35.

Moreover instead of a simple plate, other 'lid' components can be fitted onto the seal, for example a hemispherical dome, with an outer peripheral annular flange which engages the seal. It is also convenient with such a two component inner lid part to provide a transparent 'plate' so as to enable a timer, clock face or the like in the box to be externally visible.

It will be noted that no vibration resistant/tamper resistant means are shown in embodiment of Figures 34 and 35, but these could be provided if required.

Figure 36 shows a box 61 and connector 62, which differ from box 10 and connector 13 in respect of the tooth 63 of the connector and associated shoulder surface 64 of each of the ports of the box. With this embodiment, as shown best in Figure 37, the longitudinal side of the tooth 63 opposite the taper thereof is not radial, as with tooth 31, but is sloped, as at 65, in the same direction as the taper. Correspondingly the shoulder surface 64 of the wall of each of the ports of the box is not radial as with the surface 22, but is sloped to match the slope of the tooth surface 65. This arrangement produces a more secure lock than with radially engaging surfaces.

Figure 38 shows the same sloped surfaces of the tooth and port wall as in Figure 37, but differs in that the connector is engaged at a port of a different shape/type of distribution box 66, for example having only two facing ports and a bottom fixing flange 67.

It will be understood that the distribution box can be provided in more than one size, and it will also be understood that by the use of suitable connectors it is possible to connect one distribution box directly to another with or without an intervening conduit. Similarly it is possible to connect together a series of such distribution boxes.

In another embodiment, the lid could be provided with one or more protrusions for engaging with the or each connector to provide a second lock to prevent a connector being forcibly twisted out of its opening/port despite the first lock provided by the tooth 31. In an alternative arrangement, this 'second' lock could instead be the only lock, i.e. the 'first' lock could be omitted. This would enable both the body and the or each connector to be of rigid material.

It is considered that all of the inventive aspects of the invention disclosed herein can be used independently of one another, the inventive aspects generally being:-
(i) Means for attaching the conduit at an opening with radial seal compression;
(ii) A box assembly with a lid having a ratchet-like lock;
(iii) A lidded container where an inner part of the lid can be retained against rotation relative to the container above rotation of an outer lid part and;
(iv) Means for retaining in a distribution box assembly a mounting plate at least partly by a connector received in a port of the distribution box.
(v) A box assembly with a multi-part lid which effectively seals the assembly.

## Claims

1. Means for attaching a conduit at an opening, or for closing said opening, comprising a connector (12; 13; 62), to which said conduit is, or is adapted to be, engaged, or which is closed, and a body (10; 61; 66) in which the opening is provided, the opening having an inwardly radially extending wall (19) with cut-outs (20) around the periphery thereof and a rear surface, the connector (12; 13; 62) having at or adjacent one end thereof a plurality of castellations (29) complementary to the cut-outs (20) of the opening, the castellations (29) being formed as tightening means such that if the castellations (29) are aligned with and moved through said cut-outs (20) respectively and the connector (12; 13; 62) then rotated the castellations (29) engage said rear surface with the tightening means causing the connector (12; 13; 62) to be urged towards the opening, **characterised by** an inner annular surface (18) of the opening forward of its inwardly radially extending wall (19) being tapered so that as rotation occurs and the connector (12; 13; 62) is urged towards the opening, an annular seal (27) carried by the connector (12; 13; 62) is radially compressed so as tightly to seal between the connector (12; 13; 62) and the body (10; 61; 66).

2. Means as claimed in Claim 1, wherein the tightening means of the castellations (29) is formed by them being of wedge shape.

3. Means as claimed in Claim 1 or Claim 2, wherein the annular seal (27) is carried in an annular groove (32) of the connector rearwards of its castellations (29).

4. Means as claimed in any one of Claims 1 to 3, wherein the seal (27) is an O-ring.

5. Means as claimed in any one of Claims 1 to 4, wherein the radially inwardly extending wall (19) of the opening defines a shoulder surface (22; 64) at one side of one of said cut-outs (20) and the connector (12; 13; 62) has a flexible projection (31; 63) with a surface arranged to engage said shoulder surface (22; 64) when the projection (31; 63) is received in said one of the cut-outs (20), thereby to retain the connector (12; 13; 62) in engagement with said body (10; 61; 66) against rotational movement to release it therefrom.

6. Means as claimed in Claim 5, wherein a ramp surface (21) leads to said shoulder surface (22) and during engagement of the connector (12; 13; 62) with said opening in the body (10; 61; 66), a tapered surface of said projection (31) engages said ramp surface (21), thereby effecting inward flexing of the projection (31) until it snap-fittingly engages in said one of said cut-outs (20).

7. Means as claimed in Claim 5 or Claim 6, wherein the projection (31; 63) is releasable from said one of the cut-outs (20) by flexing it inwards either manually or by means of an implement.

8. Means as claimed in any one of Claims 5 to 7, wherein the inter-engaging shoulder surface (22; 64) and the projection (31; 63) surface are both radial or generally radial.

9. Means as claimed in any one of Claims 5 to 7, wherein the inter-engaging shoulder surface (22; 64) and the projection (31; 63) surface are both sloped and thus non-radial.

10. Means as claimed in any one of the preceding claims, wherein said opening is a port (16) formed in a side wall (15) of an electrical distribution box.

11. Means as claimed in Claim 10, wherein a plurality of said ports (16) are provided in said side wall (15) and/or a side wall (15) of the box.

12. Means as claimed in any one of the preceding claims, wherein the connector (12) is in the form of a blanking plug.

13. Means as claimed in any one of Claims 1 to 11, wherein the connector (13) is open at its opposite ends and includes a cap nut (33) for connecting said conduit to said connector (13).

14. Means as claimed in any one of Claims 5 to 9, wherein the body (10) has a lid (11) with at least one protrusion for engaging said connector (12; 13; 62) to provide an additional lock to said projection (31; 63), retaining the connector (12; 13; 62) in position to compress said seal (27).

15. Means as claimed in any one of Claims 1 to 4, wherein the body (10) has a lid (11) with at least one protrusion for engaging said connector (12; 13; 62) to provide a lock retaining the connector (12; 13; 62) in position to compress said seal (27).

16. Means as claimed in Claim 15, wherein said body (10; 61; 66) and said connector (12; 13; 62) are of rigid material.

17. A box assembly comprising means as claimed in claim 1, wherein the body (10; 61; 66) is constituted by a box having an open end with a screw thread (17) on the exterior of said box at or adjacent said open end, and a lid assembly (11) comprising an outer lid part (34) and an inner lid part (35), the outer lid part (34) being centrally open to receive the closed inner lid part (35) and being provided with inner screw threads (38) complementary to said threads (17) on the exterior of the box, an outer peripheral surface of the inner lid part (35) being formed with serrations (46) and part of an inner peripheral surface of the outer lid part (34) being formed with complementary serrations (40) so that the serrations (40) on the outer lid part (34) pass over the serrations (46) on the inner lid part (35) as the outer lid part (34) is screwed onto the box, in use, but prevent loosening/unscrewing of the outer lid part (34), loosening/unscrewing being provided by release means (39, 41, 42, 42a) on the outer lid part (34).

18. A lidded container comprising means as claimed in claim 1, a two-part lid (11) and wherein the body (10; 61; 66) is constituted by a container body having an open end at which the lid (11) of the container is fitted, said lid (11) being formed by an outer lid part (34) which is screw-threadedly engaged with the container body, in use, and an inner lid part (35) which is directly or indirectly engaged, in use, with said container body at the open end thereof, the container body and the inner lid part (35) having respective complementary inter-engaging location means (23, 47), so that as said outer lid part (34) is tightened on said container body, in use, the inner lid part (35) fitted to the container body is prevented from rotating therewith.

19. A distribution box assembly comprising means as claimed in claim 1, wherein the body (10; 61; 66) is constituted by a box body having a base (14) and a side wall (15) upstanding from the base (14), with at least one port (16) in said side wall (15) for a connector (12; 13; 62) to be fitted in said port (16), in use, for connecting a conduit to said box assembly, and for at least partly retaining a mounting plate (49) within the box body.

20. A box assembly comprising means as claimed in claim 1, wherein the body (10; 61; 66) is constituted by a box having an open end with a screw thread (17) on the exterior of said box at or adjacent said open end, and a lid assembly (11) comprising an outer lid part (34) and an inner lid part (35), the outer lid part (34) being centrally open to receive the inner lid part (35) and being provided with inner screw threads (38) complementary to said threads (17) on the exterior of the box, the inner lid part (35) being formed of a cover component (56) having its outer peripheral portion arranged to engage sealing means (60) on an outer sealing surface of the box at the open end thereof, and an inner component (57) held between the cover component (56) and the box and preventing inward movement of the sealing means (60) when the outer lid part (34) is tightened into screw threaded engagement with the box, such tightening causing the cover component (56) to compress said sealing means (60).

## Patentansprüche

1. Mittel zum Befestigen eines Kanals an einer Öffnung oder zum Verschließen der Öffnung, die einen Verbinder (12; 13; 62), mit dem der Kanal in Eingriff gebracht ist oder dafür eingerichtet ist, in Eingriff gebracht zu werden, oder der verschlossen ist, und ein Gehäuse (10; 61; 66), in dem die Öffnung bereitgestellt wird, umfassen, wobei die Öffnung eine sich nach innen in Radialrichtung erstreckende Wand (19) mit Ausschnitten (20) um den Umfang derselben und eine hintere Fläche hat, wobei der Verbinder (12; 13; 62) an einem Ende desselben oder daran angrenzend mehrere Zinnen (29) hat, die komplementär zu den Ausschnitten (20) der Öffnung sind, wobei die Zinnen (29) als Spannmittel geformt sind derart, dass, falls die Zinnen (29) mit den Ausschnitten (20) ausgerichtet bzw. durch dieselben bewegt werden, und der Verbinder (12; 13; 62) danach gedreht wird, die Zinnen (29) die hintere Fläche in Eingriff nehmen, wobei die Spannmittel bewirken, dass der Verbinder (12; 13; 62) zu der Öffnung hin gedrängt wird, **dadurch gekennzeichnet, dass** eine innere ringförmige Fläche (18) der Öffnung vor deren sich nach innen in Radialrichtung erstreckenden Wand (19) verjüngt ist, so dass, wenn eine Drehung erfolgt und der Verbinder (12; 13; 62) zu der Öffnung hin gedrängt wird, eine durch den Verbinder (12; 13; 62) getragene ringförmige Dichtung (27) in Radialrichtung zusammengedrückt wird, um so eng zwischen dem Verbinder (12; 13; 62) und dem Gehäuse (10; 61; 66) abzudichten.

2. Mittel nach Anspruch 1, wobei das Spannmittel der Zinnen (29) **dadurch** gebildet wird, dass sie eine Keilform haben.

3. Mittel nach Anspruch 1 oder Anspruch 2, wobei die ringförmige Dichtung (27) in einer ringförmigen Rille (32) des Verbinders hinter dessen Zinnen (29) getragen wird.

4. Mittel nach einem der Ansprüche 1 bis 3, wobei die Dichtung (27) ein O-Ring ist.

5. Mittel nach einem der Ansprüche 1 bis 4, wobei die sich nach innen in Radialrichtung erstreckende Wand (19) der Öffnung eine Absatzfläche (22; 64) auf einer Seite eines der Ausschnitte (20) definiert und der Verbinder (12; 13; 62) einen flexiblen Vorsprung (31; 63) hat, mit einer Fläche, die dafür angeordnet ist, die Absatzfläche (22; 64) in Eingriff zu nehmen, wenn der Vorsprung (31; 63) in dem einen der Ausschnitte (20) aufgenommen wird, um **dadurch** den Verbinder (12; 13; 62) in Eingriff mit dem Gehäuse (10; 61; 66) festzuhalten gegen eine Drehbewegung, um ihn daraus zu lösen.

6. Mittel nach Anspruch 5, wobei eine Rampenfläche (21) zu der Absatzfläche (22) führt und während des Eingriffs des Verbinders (12; 13; 62) mit der Öffnung in dem Gehäuse (10; 61; 66) eine verjüngte Fläche des Vorsprungs (31) die Rampenfläche (21) in Eingriff nimmt, wodurch eine Biegung des Vorsprungs (31) nach innen bewirkt wird, bis er in Rastpassung in den einen der Ausschnitte (20) eingreift.

7. Mittel nach Anspruch 5 oder Anspruch 6, wobei der Vorsprung (31; 63) von dem einen der Ausschnitte (20) gelöst werden kann **dadurch**, dass er entweder von Hand oder mit Hilfe eines Werkzeugs nach innen gebogen wird.

8. Mittel nach einem der Ansprüche 5 bis 7, wobei die Absatzfläche (22; 64) und die Fläche des Vorsprungs (31; 63), die ineinandergreifen, beide radial oder im Allgemeinen radial sind.

9. Mittel nach einem der Ansprüche 5 bis 7, wobei die Absatzfläche (22; 64) und die Fläche des Vorsprungs (31; 63), die ineinandergreifen, beide abgeschrägt und folglich nicht radial sind.

10. Mittel nach einem der vorhergehenden Ansprüche, wobei die Öffnung ein in einer Seitenwand (15) einer elektrischen Verteilerdose geformter Anschluss (16) ist.

11. Mittel nach Anspruch 10, wobei mehrere der Anschlüsse (16) in der Seitenwand (15) und/oder einer Seitenwand (15) der Dose bereitgestellt werden.

12. Mittel nach einem der vorhergehenden Ansprüche, wobei der Verbinder (12) die Form eines Blindstopfens hat.

13. Mittel nach einem der Ansprüche 1 bis 11, wobei der Verbinder (13) an seinen entgegengesetzten Enden offen ist und eine Hutmutter (33) zum Verbinden des Kanals mit dem Verbinder (13) einschließt.

14. Mittel nach einem der Ansprüche 5 bis 9, wobei das Gehäuse (10) einen Deckel (11) mit wenigstens einem Vorsprung zum Ineingriffnehmen des Verbinders (12; 13; 62) hat, um eine zusätzliche Arretierung zu dem Vorsprung (31; 63) bereitzustellen, die den Verbinder (12; 13; 62) in Position festhält, um die Dichtung (27) zusammenzudrücken.

15. Mittel nach einem der Ansprüche 1 bis 4, wobei das Gehäuse (10) einen Deckel (11) mit wenigstens einem Vorsprung zum Ineingriffnehmen des Verbinders (12; 13; 62) hat, um eine Arretierung bereitzustellen, die den Verbinder (12; 13; 62) in Position festhält, um die Dichtung (27) zusammenzudrücken.

16. Mittel nach Anspruch 15, wobei das Gehäuse (10; 61; 66) und der Verbinder (12; 13; 62) aus einem starren Werkstoff sind.

17. Dosenbaugruppe, die Mittel nach Anspruch 1 umfasst, wobei das Gehäuse (10; 61; 66) aus einer Dose, die ein offenes Ende mit einem Schraubengewinde (17) an dem Äußeren der Dose an dem offenen Ende oder angrenzend an dasselbe hat, und einer Deckelbaugruppe (11), die einen äußeren Deckelteil (34) und einen inneren Deckelteil (35) umfasst, besteht, wobei der äußere Deckelteil (34) mittig offen ist, um den geschlossenen inneren Deckelteil (35) aufzunehmen, und mit inneren Schraubengewindegängen (38) versehen ist, die komplementär zu den Gewindegängen (17) an dem Äußeren der Dose sind, wobei eine äußere Umfangsfläche des inneren Deckelteils (35) mit Verzahnungen (46) geformt ist und ein Teil einer inneren Umfangsfläche des äußeren Deckelteils (34) mit komplementären Verzahnungen (40) geformt ist, so dass die Verzahnungen (40) an dem äußeren Deckelteil (34) über die Verzahnungen (46) an dem inneren Deckelteil (35) hinweggehen, wenn der äußere Deckelteil (34) bei Anwendung auf die Dose geschraubt wird, aber ein Lösen/Abschrauben des äußeren Deckelteils (34) verhindern, wobei das Lösen/Abschrauben durch Freigabemittel (39, 41, 42, 42a) an dem äußeren Deckelteil (34) gewährleistet wird.

18. Mit Deckel versehener Behälter, der Mittel nach Anspruch 1, einen zweiteiligen Deckel (11) umfasst und wobei das Gehäuse (10; 61; 66) aus einem Behältergehäuse besteht, das ein offenes Ende hat, an dem der Deckel (11) des Behälters angebracht wird, wobei der Deckel (11) durch einen äußeren Deckelteil (34), der bei Anwendung in Schraubengewinde-Eingriff mit dem Behältergehäuse gebracht wird, und einen inneren Deckelteil (35), der bei Anwendung unmittelbar oder mittelbar mit dem Behältergehäuse an dem offenen Ende desselben in Eingriff gebracht wird, gebildet wird, wobei das Behältergehäuse und der innere Deckelteil (35) jeweilige komplementäre ineinandergreifende Positionierungsmittel (23, 47) haben, so dass, wenn der äußere Deckelteil (34) bei Anwendung an dem Behältergehäuse festgezogen wird, verhindert wird, dass sich der an dem Behältergehäuse angebrachte innere Deckelteil (35) mit demselben dreht.

19. Verteilerdosen-Baugruppe, die Mittel nach Anspruch 1 umfasst, wobei das Gehäuse (10; 61; 66) aus einem Dosengehäuse besteht, das eine Basis (14) und eine von der Basis (14) hochstehende Seitenwand (15) hat, mit wenigstens einem Anschluss (16) in der Seitenwand (15) für einen Verbinder (12; 13; 62), der bei Anwendung in dem Anschluss (16) angebracht werden soll, um einen Kanal mit der Dosenbaugruppe zu verbinden und um wenigstens teilweise eine Montageplatte (49) innerhalb des Dosengehäuses festzuhalten.

20. Dosenbaugruppe, die Mittel nach Anspruch 1 umfasst, wobei das Gehäuse (10; 61; 66) aus einer Dose, die ein offenes Ende mit einem Schraubengewinde (17) an dem Äußeren der Dose an dem offenen Ende oder angrenzend an dasselbe hat, und einer Deckelbaugruppe (11), die einen äußeren Deckelteil (34) und einen inneren Deckelteil (35) umfasst, besteht, wobei der äußere Deckelteil (34) mittig offen ist, um den geschlossenen inneren Deckelteil (35) aufzunehmen, und mit inneren Schraubengewindegängen (38) versehen ist, die komplementär zu den Gewindegängen (17) an dem Äußeren der Dose sind, wobei der innere Deckelteil (35) aus einem Abdeckungsbauteil (56), dessen äußeren Umfangsabschnitt dafür angeordnet ist, Abdichtungsmittel (60) an einer äußeren Abdichtungsfläche der Dose an dem offenen Ende derselben in Eingriff zu nehmen, und einem inneren Bauteil (57), das zwischen dem Abdeckungsbauteil (56) und der Dose gehalten wird und eine Bewegung der Abdichtungsmittel (60) nach innen verhindert, wenn der äußere Deckelteil (34) in einen Schraubengewinde-Eingriff mit der Dose angezogen wird, besteht, wobei ein solches Anziehen bewirkt, dass das Abdeckungsbauteil (56) die Abdichtungsmittel (60) zusammendrückt.

## Revendications

1. Moyen pour fixer un conduit au niveau d'une ouverture, ou pour fermer ladite ouverture, comprenant un raccord (12 ; 13 ; 62) dans lequel ledit conduit est engagé, ou est adapté pour être engagé, ou qui est fermé, et un corps (10 ; 61 ; 66) dans lequel est agencée l'ouverture, l'ouverture comportant une paroi s'étendant radialement vers l'intérieur (19), comportant des entailles (20) autour de sa périphérie, et une surface arrière, le raccord (12 ; 13 ; 62) comportant au niveau d'une extrémité ou près de celle-ci plusieurs crénelures (29) complémentaires des entailles (20) de l'ouverture, les crénelures (29) ayant la forme de moyens de serrage, de sorte que lorsque les crénelures (29) sont respectivement alignées avec lesdites entailles (20) et déplacées à travers celles-ci, le raccord (12 ; 13 ; 62) étant ensuite tourné, les crénelures (29) s'engagent dans ladite surface arrière, le moyens de serrage entraînant la poussée du raccord (12 ; 13 ; 62) vers l'ouverture, **caractérisé en ce qu'**une surface annulaire interne (18) de l'ouverture est effilée devant sa paroi s'étendant radialement vers l'intérieur (19), de sorte que lors de la rotation, le raccord (12 ; 13 ; 62) étant poussé vers l'ouverture, un joint annulaire (27) supporté par le raccord (12 ; 13 ; 62) est comprimé radialement, établissant ainsi un joint étanche entre le raccord (12 ; 13 ; 62) et le corps (10 ; 61 ; 66).

2. Moyen selon la revendication 1, dans lequel le moyen de serrage des crénelures (29) est formé par suite de leur forme en coin.

3. Moyen selon les revendications 1 ou 2, dans lequel le joint annulaire (27) est supporté dans une rainure annulaire (32) du raccord, vers l'arrière de ses crénelures (29).

4. Moyen selon l'une quelconque des revendications 1 à 3, dans lequel le joint (27) est un joint torique d'étanchéité.

5. Moyen selon l'une quelconque des revendications 1 à 4, dans lequel la paroi s'étendant radialement vers l'intérieur (19) de l'ouverture définit une surface d'épaulement (22 ; 64) au niveau d'un côté de l'une desdites entailles (20), le raccord (12 ; 13 ; 62) comportant une saillie flexible (31 ; 63) avec une surface destinée à s'engager dans ladite surface d'épaulement (22 ; 64) lorsque la saillie (31 ; 63) est reçue dans l'une des entailles (20), pour maintenir ainsi l'engagement du raccord (12 ; 13 ; 62) dans ledit corps (10 ; 61 ; 66), contre un déplacement rotatif afin de le dégager de celui-ci.

6. Moyen selon la revendication 5, dans lequel une surface en rampe (21) mène vers ladite surface d'épaulement (22), et au cours de l'engagement du raccord (12 ; 13 ; 62) dans ladite ouverture dans le corps (10 ; 61 ; 66), une surface effilée de ladite saillie (31) s'engage dans ladite surface en rampe (21), entraînant ainsi un fléchissement vers l'intérieur de la saillie (31) jusqu'à son engagement par encliquetage dans l'une desdites entailles (20).

7. Moyen selon les revendications 5 ou 6, dans lequel la saillie (31 ; 63) peut être dégagée de ladite une des entailles (20) par fléchissement vers l'intérieur, de manière manuelle ou par l'intermédiaire d'un outil.

8. Moyen selon l'une quelconque des revendications 5 à 7, dans lequel la surface d'épaulement (22 ; 64) et la surface de la saillie (31 ; 63) à engagement mutuel sont toutes les deux radiales ou généralement radiales.

9. Moyen selon l'une quelconque des revendications 5 à 7, dans lequel la surface d'épaulement (22 ; 64) et la surface de la saillie (31 ; 63) à engagement mutuel sont toutes les deux inclinées et donc non radiales.

10. Moyen selon l'une quelconque des revendications précédentes, dans lequel ladite ouverture est un orifice (16) formé dans une paroi latérale (15) d'une boîte de distribution électrique.

11. Moyen selon la revendication 10, dans lequel plusieurs desdits orifices (16) sont agencées dans ladite paroi latérale (15) et/ou une paroi latérale (15) de la boîte.

12. Moyen selon l'une quelconque des revendications précédentes, dans lequel le raccord (12) a la forme d'un bouchon d'obturation.

13. Moyen selon l'une quelconque des revendications 1 à 11, dans lequel le raccord (13) est ouvert au niveau de ses extrémités opposées et englobe un écrou borgne (33) pour raccorder ledit conduit audit raccord (13).

14. Moyen selon l'une quelconque des revendications 5 à 9, dans lequel le corps (10) comporte un couvercle (11) avec au moins une protubérance destinée à s'engager dans ledit raccord (12 ; 13 ; 62) pour assurer un verrouillage additionnel de ladite saillie (31 ; 63), retenant le raccord (12 ; 13 ; 62) dans sa position afin de comprimer ledit joint (27).

15. Moyen selon l'une quelconque des revendications 1 à 4, dans lequel le corps (10) comporte un couvercle (11) avec au moins une protubérance destinée à s'engager dans ledit raccord (12 ; 13 ; 62), pour établir un verrou retenant le raccord (12 ; 13 ; 62) dans sa position afin de comprimer ledit joint (27).

16. Moyen selon la revendication 15, dans lequel ledit corps (10 ; 61 ; 66) et ledit raccord (12 ; 13 ; 62) sont composés d'un matériau rigide.

17. Assemblage de boîte, comprenant un moyen selon la revendication 1, dans laquelle le corps (10 ; 61 ; 66) est constitué par une boîte comportant une extrémité ouverte avec un filet de vis (17) sur l'extérieur de ladite boîte ou près de ladite extrémité ouverte, et un assemblage de couvercle (11), comprenant une partie externe du couvercle (34) et une partie interne du couvercle (35), la partie externe du couvercle (34) étant ouverte au centre pour recevoir la partie interne fermée du couvercle (35) et comportant des filets de vis internes (38) complémentaires desdits filets (17) sur l'extérieur de la boîte, une surface périphérique externe de la partie interne du couvercle (35) comportant des dentelures (46) et une partie d'une surface périphérique interne de la partie externe du couvercle (34) comportant des dentelures complémentaires (40), de sorte que les dentelures (40) sur la partie externe du couvercle (34) passent au-dessus des dentelures (46) sur la partie interne du couvercle (35) lorsque la partie externe du couvercle (34) est vissée sur la boîte, mais empêchent un desserrage/dévissage de la partie externe du couvercle (34), le desserrage/dévissage étant assuré par un moyen de dégagement (39, 41, 42, 42a) sur la partie externe du couvercle (34).

18. Récipient à couvercle, comprenant un moyen selon la revendication 1, un couvercle en deux parties (11), le corps (10 ; 61 ; 66) étant constitué par un corps de récipient comportant une extrémité ouverte au niveau de laquelle est ajusté le couvercle (11) du récipient, ledit couvercle (11) étant formé par une partie externe du couvercle (34) engagée par filetage dans le corps du récipient en service, et une partie interne du couvercle (35) engagée en service de manière directe ou indirecte dans ledit corps du récipient au niveau de son extrémité ouverte, le corps du récipient et la partie interne du couvercle (35) comportant des moyens de positionnement à engagement mutuel complémentaires respectifs (23, 47), de sorte que lorsque ladite partie externe du couvercle (34) est serrée sur ledit corps du récipient en service, la partie interne du couvercle (35) fixée sur le corps du récipient est empêchée de tourner avec celle-ci.

19. Assemblage de boîte de distribution , comprenant un moyen selon la revendication 1, dans laquelle le corps (10 ; 61 ; 66) est constitué par un corps de boîte, comportant une base (14) et une paroi latérale (15) remontant de la base (14), avec au moins un orifice (16) dans ladite paroi latérale (15) pour un raccord (12 ; 13 ; 62) destiné à être fixé dans ledit orifice (16) en service pour raccorder un conduit audit assemblage de boîte, et pour retenir au moins partiellement une plaque de montage (49) dans le corps de la boîte.

20. Assemblage de boîte, comprenant un moyen selon la revendication 1, dans laquelle le corps (10 ; 61 ; 66) est constitué par une boîte comportant une extrémité ouverte avec un filet de vis (17) sur l'extérieur de ladite boîte ou près de ladite extrémité ouverte, et un assemblage de couvercle (11), comprenant une partie externe du couvercle (34) et une partie interne du couvercle (35), la partie externe du couvercle (34) étant ouverte au centre pour recevoir la partie interne du couvercle (35) et comportant des filets de vis internes (38) complémentaires desdits filets (17) sur l'extérieur de la boîte, la partie interne du couvercle (35) comprenant un composant de couvercle (56), comportant une partie périphérique externe agencée de sorte à s'engager dans un moyen d'étanchéité (60) sur une surface d'étanchéité externe de la boîte, au niveau de son extrémité ouverte, et un composant interne (57), retenu entre le composant de couvercle (56) et la boîte et empêchant un déplacement vers l'intérieur du moyen d'étanchéité (60) lorsque la partie externe du couvercle (34) est serrée et engagée par filetage dans la boîte, ce serrage entraînant le composant de couvercle (56) à comprimer ledit moyen d'étanchéité (60).
